Europäisches Patentamt

European Patent Office

Office européen des brevets

(19)

(11) Numéro de publication: **0 258 092 B1**

(12) **FASCICULE DE BREVET EUROPEEN**

(45) Date de publication de fascicule du brevet:
22.05.91

(51) Int. Cl.⁵: **A01N 1/02**, F25D 25/00,
F25D 3/10

(21) Numéro de dépôt: 87401726.2

(22) Date de dépôt: 24.07.87

(54) **Appareil de congélation de produits biologiques conditionnés en paillettes au moyen d'un liquide cryogénique.**

(30) Priorité: 28.07.86 FR 8610908

(43) Date de publication de la demande:
02.03.88 Bulletin 88/09

(45) Mention de la délivrance du brevet:
22.05.91 Bulletin 91/21

(84) Etats contractants désignés:
AT BE CH DE ES FR GB GR IT LI LU NL SE

(56) Documents cités:
EP-A- 0 090 599          EP-A- 0 150 146
EP-A- 0 181 235          EP-A- 0 184 417
DE-A- 1 401 608          DE-A- 3 125 345
DE-A- 3 225 672          FR-A- 1 296 171
FR-A- 1 566 664          FR-A- 2 468 908
US-A- 4 232 453

(73) Titulaire: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07(FR)**

(72) Inventeur: **Angelier, Nicole**
**17, allée Maurice Ravel**
**F-38130 Echirolles(FR)**
Inventeur: **Bionda, Joseph**
**Le Magnin Saint Nicolas de Macherin**
**F-38500 Voiron(FR)**
Inventeur: **Thonnelier, Jean-Yves**
**13, Chemin Billerey**
**F-38360 Sassenage(FR)**

(74) Mandataire: **Sadones Laurent, Renée et al**
**L'AIR LIQUIDE 75, quai d'Orsay**
**F-75321 Paris Cédex 07(FR)**

## Description

La présente invention est relative à un appareil de congélation de produits biologiques, notamment d'embryons, conditionnés en paillettes, du type décrit dans le préambule de la revendication 1.

La congélation d'embryons, animaux ou humains, conditionnés en paillettes dans un liquide cryoprotecteur, nécessite le respect d'un programme de température très précis adapté à l'embryon et à son conditionnement ; il est issu de l'expérience, et doit être respecté scrupuleusement pour assurer la survie de l'embryon.

A titre d'exemple, un programme de température comporte les phases principales suivantes :
- une première descente en température depuis l'ambiante jusqu'à un palier de surfusion du liquide cryoprotecteur (-5 à -7° C), à une vitesse de quelques ° C/mn.
- à cette température, on procède au "seeding", c'est-à-dire au déclenchement de la cristallisation par un apport frigorifique bref et intense, par exemple en amenant au contact des paillettes une masse métallique préalablement refroidie. La température remonte alors à la température de cristallisation du milieu.
- à partir de ce point, on reprend la descente en température à une vitesse de l'ordre de 0,2 à 0,5° C/mn, jusque vers -35 - c, température à laquelle les paillettes peuvent être immergées dans l'azote liquide, puis stockées en récipient cryobiologique.

Si, comme c'est généralement le cas, plusieurs paillettes sont congelées en même temps, on devra respecter une stricte homogénéité thermique entre toutes les paillettes, afin de pouvoir faire le seeding (automatique ou manuel) sur toutes les paillettes en même temps, et afin également de n'utiliser qu'une seule prise de température, placée par exemple dans une paillette témoin, pour la commande du programmateur de température.

Il existe de nombreux types de congélateurs biologiques utilisant comme source frigorifique l'azote liquide ou du froid mécanique du type à bain d'alcool. Certains appareils fonctionnant à l'azote liquide sont particulièrement bien adaptés, car ils permettent d'enchaîner dans une même enceinte la congélation et l'immersion finale dans l'azote liquide.

Cependant, l'azote liquide est une source frigorifique puissante qui doit être mise en oeuvre avec précaution si l'on veut respecter précisément le programme défini, sur un grand nombre de paillettes en même temps.

Des solutions existantes utilisent l'azote liquide de la façon suivante.

Dans un premier type d'appareils (DE-A-31 25 345, Fig.2), les paillettes sont disposées dans une enceinte isolée, dans laquelle un ventilateur assure l'homogénéité thermique du gaz. De l'azote liquide est injecté dans l'enceinte, sous le contrôle du régulateur, et le ventilateur assure la dispersion du liquide. Le congélateur est relié à un récipient d'azote liquide, qui doit être équipé d'un dispositif de pressurisation, et une électrovanne pilotée par le régulateur règle l'introduction d'azote dans l'enceinte.

Ce type de matériel est bien adapté aux besoins actuels des laboratoires spécialisés, mais le développement de la technique de congélation d'embryons nécessite des appareils qui, par leur faible prix, leur simplicité et leur robustesse, répondent mieux aux conditions particulières d'utilisation : congélation sur le terrain (à la ferme), matériel transportable, emploi par du personnel non spécialiste.

Par ailleurs, on connaît aussi (DE-A-31 25 345, Fig.3) des congélateurs où le refroidissement est assuré en utilisant simplement le gradient thermique dans les vapeurs au-dessus d'un bain d'azote liquide : les paillettes sont descendues progressivement dans les vapeurs, jusqu'à être immergées dans le liquide. Ces appareils sont simples, mais ils ne permettent pas d'obtenir des pentes de refroidissement très faibles et parfaitement contrôlées, ce qui les rend inaptes à leur utilisation en congélation d'embryons.

On connaît aussi (FR-A-2 468 908) un appareil de congélation réalisé comme suit : dans le col d'un récipient d'azote liquide est monté un caisson métallique dans une cavité duquel sont placés des échantillons à refroidir. Ceux-ci sont immergés dans un liquide et reposent directement sur le fond de la cavité, au contact du métal. Les parois latérales et le fond du caisson sont directement au contact des vapeurs froides d'azote. Un tel appareil n'est pas du tout adapté pour le respect d'une courbe de descente en température précise.

L'invention a pour but de fournir un appareil transportable et autonome, particulièrement simple et robuste de construction, permettant à du personnel même non spécialiste de réaliser de façon fiable la congélation d'embryons.

A cet effet, l'invention a pour objet un appareil du type précité, caractérisé par le contenu de la partie caractérisante de la revendication 1.

D'autres caractéristiques de l'invention sont décrites dans les revendications 2 à 10.

Un exemple de réalisation de l'invention va maintenant être décrit en regard des dessins annexés, sur lesquels :
- la figure 1 est une vue en coupe verticale d'un appareil de congélation conforme à l'invention ;
- la figure 2 est une vue partielle à plus grande échelle d'une variante, prise en coupe suivant une ligne correspondant à la ligne II-II de la figure 1 ;

- la figure 3 est une vue analogue à la figure 2 d'une autre variante ;
- la figure 4 est une vue de dessus de l'objet de la figure 3.

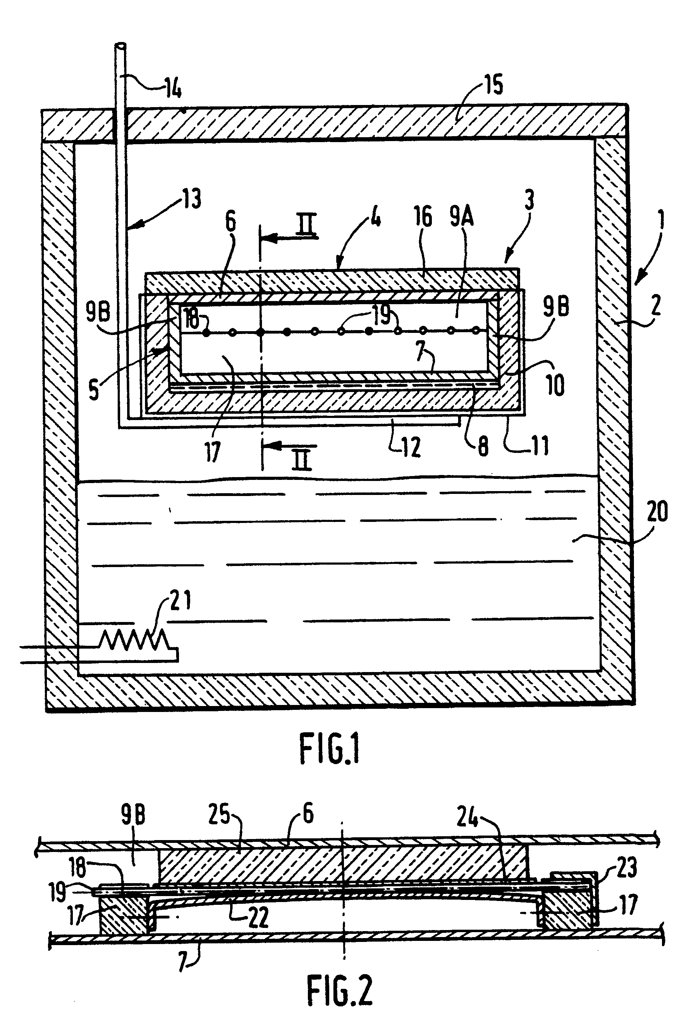

L'appareil de congélation d'embryons représenté à la figure 1 comprend une enceinte extérieure 1 munie d'une isolation thermique 2 à hautes performances, et un caisson 3 muni d'une isolation thermique 4 à performances nettement inférieures.

Le caisson 3 a une forme parallélépipédique aplatie et comprend essentiellement une cuve 5 et un couvercle amovible 6 tous deux en métal de forte épaisseur, par exemple de l'ordre de plusieurs millimètres, cette épaisseur étant la même pour toutes les faces de la cuve et pour le couvercle, pour des raisons de commodité de fabrication.

La cuve 5 comprend un fond horizontal 7 sur la face inférieure duquel est collée une résistance électrique en film 8, et des parois latérales 9A, 9B. Elle est emboîtée dans une cuvette 10 en matière isolante, par exemple en mousse de matière plastique rigide, laquelle est elle-même emboîtée dans une cuvette 11 en tôle. Cette dernière est fixée à la branche horizontale inférieure 12 de deux supports 13 en L, la branche verticale 14 de ces supports traversant à coulissement deux orifices prévus dans le couvercle amovible 15 de l'enceinte 1.

Des moyens non représentés permettent de positionner les supports 13 à plusieurs hauteurs, de façon à pouvoir disposer le caisson 3 dans au moins trois positions différentes dans l'enceinte 1, à savoir une position haute proche du bord supérieur des parois latérales de l'enceinte, une position intermédiaire représentée à la figure 1, et une position basse proche du fond inférieur de l'enceinte.

Par ailleurs, l'isolation 4 du caisson est complétée par une plaque 16 en matière isolante fixée sur la face externe du couvercle 6.

Parallèlement à deux faces latérales 9A du caisson, il est prévu dans celui-ci deux porte-paillettes horizontaux 17. Chaque porte-paillette est constitué d'une réglette en matière isolante, par exemple en matière plastique, posée sur le fond 7 et fixée par ses extrémités aux deux autres faces latérales 9B du caisson. Ces réglettes comportent dans leur face supérieure une série d'évidements tranversaux semi-circulaires 18, alignés coaxialement deux à deux. Ainsi, une série de paillettes 19, constituées de longs tubes de faible diamètre en matière plastique, peuvent être disposées parallèlement les unes aux autres, en une seule couche horizontale, chacune des paillettes étant portée par un évidement 18 d'un porte-paillette 17 et par l'évidement associé de l'autre porte-paillettes. La hauteur du caisson n'est que légèrement supérieure à celle des porte-paillettes munis des paillettes 19.

En fonctionnement, on remplit partiellement l'enceinte 1 d'azote liquide, de façon à constituer un bain 20 de ce corps jusqu'à une hauteur prédéterminée ; on dispose dans chaque paillette, à une distance donnée de ses extrémités, un embryon à congeler, on charge les paillettes dans le caisson, et l'on dispose le caisson 3 ainsi chargé et muni de son couvercle dans sa position intermédiaire, ou il baigne entièrement dans les vapeurs froides d'azote qui surmontent le bain 20. Les paillettes se trouvent alors dans un même plan horizontal, et tous les embryons sont sensiblement alignés le long d'une même droite horizontale.

Soit par les entrées de chaleur naturelles, soit au moyen d'une résistance électrique 21 prévue près du fond de l'enceinte 1, on assure dans celle-ci une évaporation constante d'azote, par exemple de l'ordre de 1 l/h, de façon à créer autour du caisson un apport constant de frigories servant à la congélation des paillettes.

L'isolation 4 du caisson est choisie de manière telle que la vitesse de descente en température à l'intérieur de celui-ci provoquée par cet apport de frigories soit légèrement supérieure à la plus grande vitesse requise dans le programme de congélation considéré, soit quelques degrés C/mn.

Pour ajuster la vitesse descente en température à la valeur prescrite, on apporte en outre au caisson un flux de chaleur par effet Joule commandé de façon précise au moyen de la résistance 8, par l'intermédiaire de fils (non représentés) s'étendant dans les supports 13 jusqu'à une source de courant électrique (non représentée) extérieure à l'enceinte 1. Cet apport de chaleur est homogénéisé ou diffusé sur toute la surface du fond 7 du caisson par la forte épaisseur de ce fond, et il est commandé par un régulateur (non représenté) à partir des données de température fournies par un thermo-couple (non représenté) dont est équipée l'une des paillettes.

Ainsi, les paillettes sont confinées dans un espace restreint presque isotherme mais dans lequel se produit tout de même une certaine convection naturelle de bas en haut, et les paillettes ne sont soumises, de point de vue thermique, qu'à cette seule convection naturelle.

Grâce à la manière dont sont assurés les apports de froid et de chaleur, les surfaces isothermes sont pratiquement horizontales dans tout le caisson, et en particulier, compte tenu de la disposition des paillettes en une seule couche horizontale, toutes les paillettes sont à chaque instant à une température uniforme. Ceci rend possible l'obtention précise du programme de température prescrit pour toutes les paillettes simultanément, la température des paillettes étant régulée à chaque instant par la régulation de la puissance dissipée dans la résistance 8, à partir des données correspondant à une seule des paillettes.

Lorsqu'une température de surfusion choisie (par exemple - 7° C) est atteinte, on remonte le caisson jusqu'à sa position supérieure, et l'on ouvre le couvercle 15 de l'enceinte. Le caisson se trouve alors dans un environnement constitué d'un mélange d'azote froid et d'air ambiant, à une température voisine de cette température de surfusion. On ouvre ensuite le couvercle 6 du caisson, et l'on procède au seeding en amenant au contact de toutes les paillettes, à l'emplacement des embryons, une barre métallique horizontale, dite "inducteur thermique", préalablement refroidie dans de l'azote liquide.

Ensuite, on referme le caisson puis l'enceinte 1, on redescend le caisson à sa position intermédiaire, et l'on poursuit le programme de descente en température comme précédemment jusqu'à une température déterminée de congélation (par exemple -35° C).

Enfin, on descend le caisson jusqu'à sa position basse pour l'immerger dans le bain 20 d'azote liquide et assurer la phase finale de la congélation des embryons, ayant leur transfert dans un récipient de stockage cryobiologique.

L'appareil ainsi décrit est économique, robuste et fiable grâce à l'absence totale de pièces en mouvement telles que moteur, ventilateur, électrovannes ou organes d'agitation.

La figure 2 illustre une variante qui permet d'améliorer encore l'homogénéité des descentes en température des différentes paillettes en assurant positivement la présence d'un isotherme horizontal à leur niveau, au moins à l'emplacement des embryons. Pour celà, on dispose horizontalement, juste au-dessus et juste au-dessous de la couche des paillettes, deux plaques métalliques de faible épaisseur, par exemple de 5/20 à 1 mm d'épaisseur, qui ne sont pas en contact thermique avec le caisson 3. Dans l'exemple de la figure 2, la plaque inférieure 22, légèrement bombée vers le haut, est fixée par deux côtés opposés aux deux porte-paillettes 17, dont l'un porte une cornière 23 servant à positionner longitudinalement une extrémité des paillettes. A mi-distance entre les porte-paillettes, ce qui correspond à l'emplacement des embryons, cette plaque 22 se trouve au niveau de la génératrice inférieure des évidements 18 et donc des paillettes 19.

La plaque supérieure 24 a une dimension, dans le sens longitudinal des paillettes, légèrement inférieure à la distance séparant les deux porte-paillettes. Elle est plane et horizontale et est fixée à la face inférieure d'une plaque de mousse souple parallélépipédique 25 elle-même fixée à la face inférieure de couvercle 6 du caisson et thermiquement isolante.

Lorsque l'on charge le caisson avec les paillettes, la zone de celles-ci contenant les embryons vient au contact de la plaque inférieure 22 puis, lorsque l'on referme le couvercle 6, la plaque supérieure 24 vient s'appuyer légèrement, avec une force limitée par l'élasticité de la plaque de mousse 25, contre les paillettes. Pendant la descente en température, les plaques 22 et 24, étant conductrices thermiquement, définissent chacune une surface isotherme, ce qui assure une très grande homogénéité de température des embryons. Ceci resterait d'ailleurs vrai si les plaques n'étaient pas au contact des paillettes mais, grâce à ce contact, ces plaques procurent, de par leur inertie thermique, une meilleure régulation de la seconde descente en température après le seeding.

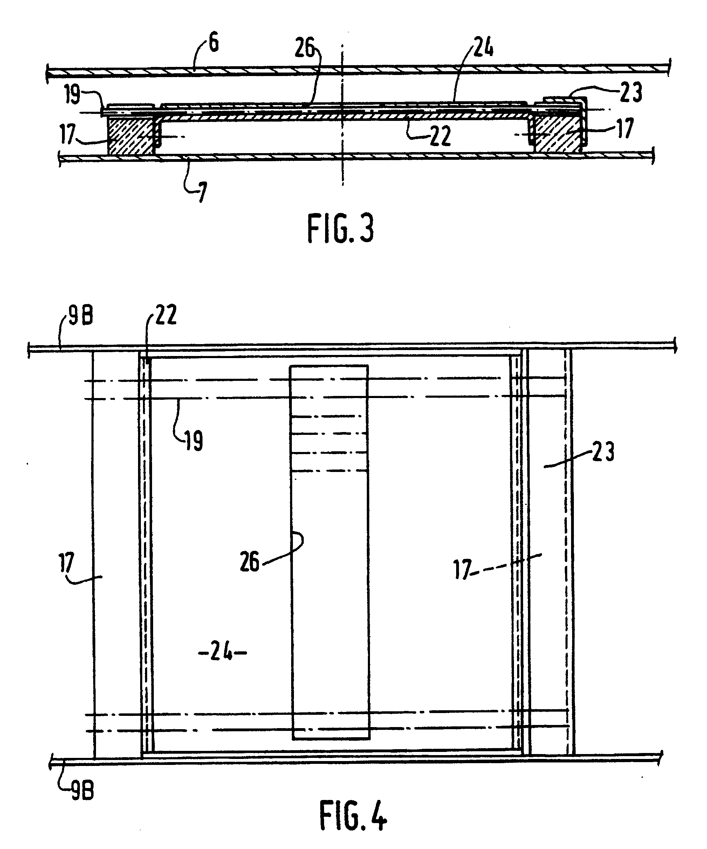

Dans la variante des figures 3 et 4, la plaque 22 est plane, et la plaque 24 est simplement posée sur les paillettes. De plus, la plaque 24 présente une fenêtre transversale 26 qui laisse apparaître toutes les paillettes au droit de l'emplacement des embryons, ce qui permet d'effectuer le seeding sans retirer cette plaque.

En variante encore, la face supérieure de couvercle 6 du caisson peut être elle aussi pourvue de moyens de chauffage tels qu'une résistance en film collée, l'apport de chaleur étant alors réalisé sur les deux grandes faces du caisson. Cette seconde résistance est particulièrement souhaitable dans une variante de l'appareil (non représentée) dans laquelle le couvercle 6 est dépourvu de toute isolation thermique.

## Revendications

1. Appareil de congélation de produits biologiques, notamment d'embryons, conditionnés en paillettes (19), du type comprenant une enceinte (1) thermiquement isolée destinée à contenir un bain (20) de liquide cryogénique, caractérisé en ce que l'enceinte contient un caisson (3) de forme aplatie muni sur au moins son fond (7) et ses faces latérales (9A, 9B) d'une couche d'isolation thermique (4) moins performante que celle (2) de l'enceinte (1) et comportant d'une part des moyens thermiquement isolants (17) de support des paillettes dans un plan horizontal unique, et d'autre part des moyens (8) de chauffage de la paroi inférieure (7) et/ou du couvercle (6) du caisson.

2. Appareil suivant la revendication 1, caractérisé en ce que le caisson (3) est porté par un support (13) permettant son positionnement à plusieurs hauteurs différentes dans l'enceinte (1).

3. Appareil suivant l'une des revendications 1 ou 2, caractérisé en ce que la ou chaque paroi (6,7) du caisson (3) pourvue de moyens de chauffage (8) comprend des moyens de diffusion de la chaleur dans son plan.

4. Appareil suivant la revendication 3, caractérisé en ce que le caisson (3) comprend des parois en métal de forte épaisseur.

5. Appareil suivant l'une quelconque des revendications 1 à 4, caractérisé en ce que le couvercle (6) du caisson (3) est dépourvu d'isolation thermique et est équipé de moyens de chauffage.

6. Appareil suivant l'une quelconque des revendications 1 à 5, caractérisé en ce que les moyens de chauffage (8) sont constitués par une résistance électrique plane collée sur la face externe de la paroi associée (6,7)

7. Appareil suivant l'une quelconque des revendications 1 à 6, caractérisé en ce que les paillettes (19) sont disposées entre deux plaques horizontales thermiquement conductrices (22,24) immédiatement adjacentes aux paillettes, prévues à l'intérieur du caisson (3).

8. Appareil suivant la revendication 7, caractérisé en ce que l'une au moins des plaques (22,24) est en contact avec les paillettes (19).

9. Appareil suivant l'une des revendications 7 ou 8, caractérisé en ce que la plaque supérieure (24) présente une fenêtre (26) perpendiculaire à la direction longitudinale des paillettes (19).

10. Appareil suivant l'une quelconque des revendications 7 à 9, caractérisé en ce que la plaque inférieure (22) est solidaire du caisson (3) tandis que la plaque supérieure (24) est portée par le couvercle (6) du caisson par l'intermédiaire d'un support thermiquement isolant (25) cédant élastiquement.

**Claims**

1. Apparatus for freezing biological products, especially embryos, packed in straws (19), of the type comprising a thermally insulated enclosure (1) intended to contain a bath (20) of cryogenic liquid, characterised in that the enclosure contains a casing (3) of flattened shape provided at least on its bottom (7) and on its side surfaces (9A,9B) with a layer of thermal insulation (4) less effective than that (2) of the enclosure and comprising on the one hand, thermally insulating means (17) for supporting straws in a single horizontal plane and on the other hand means (8) for heating the lower wall (7) and/or the cover (6) of the casing.

2. Apparatus according to claim 1, characterised in that the casing (3) is carried by a support (13) permitting its positioning at several different heights in the enclosure (1).

3. Apparatus according to one of claims 1 and 2, characterized in that the or each wall (6,7) of the casing (3) provided with heating means (8) comprises means for diffusing heat in its plane.

4. Apparatus according to claim 3, characterised in that the casing (3) comprises metal walls of large thickness.

5. Apparatus according to any one of claims 1 to 4, characterised in that the cover (6) of the casing (3) is devoid of heat insulation and is equipped with heating means.

6. Apparatus according to any one of claims 1 to 5, characterised in that said heating means (8) are constituted by a planar electrical resistor adhered to the outer surface of the associated wall (6,7).

7. Apparatus according to any one of claims 1 to 6, characterised in that the straws (19) are positioned between two horizontal thermally conducting plates (22,24) immediately adjacent the straws, provided inside the casing (3).

8. Apparatus according to claim 7, characterized in that at least one of the plates (22,24) is in contact with the straws (19).

9. Apparatus according to one of claims 7 and 8, characterised in that the upper plate (24) defines a window (26) perpendicular to the longitudinal direction of the straws (19).

10. Apparatus according to any one of claims 7 to 9, characterised in that the lower plate (22) is integral with the casing (3) while the upper plate (24) is carried by the cover (6) of the casing by the interpositioning of an elastically yielding, thermally insulating support (25).

**Ansprüche**

1. Gerät zum Kühlen von biologischen Produkten, insbesondere Embryonen, transportiert in Pailletten (19), welches einen Behälter (1) umfaßt, der wärmeisoliert ist und ein Bad (20) mit Tieftemperaturflüssigkeit enthält, dadurch gekennzeichnet, daß der Behälter einen abgeflachten Kasten enthält (3), der zumindest seinen Boden (7) und seine Seitenwände (9A, 9B) mit einer Wärmeisolierschicht (4) enthält, die weniger leistungsfähig als die (2) des Behälters ist und einerseits wäremeisolierende Mittel (17) als Halterung der Pailetten in einer einzigen horizontalen Ebene und andererseits Aufheizmittel (8) an der Innenwand (7) bzw. am Deckel (6) des Kasten besitzt.

2. Gerät gemäß Anspruch 1, dadurch gekennzeichnet, daß der Kasten (3) von einer Halterung (13) getragen wird, welche dessen Positionierung in mehreren unterschiedlichen Höhen im Behälter (1) ermöglicht.

3. Gerät gemäß einem der Ansprüche 1 oder 2, dadurch gekennzeichnet, daß die oder jede Wand (6,7) des Kastens (3), ausgestattet mit Aufheizmitteln (8), Mittel zur Wärmediffusion in deren Ebene umfaßt.

4. Gerät gemäß Anspruch 3, dadurch gekennzeichnet, daß der Kasten (3) Metallwände großer Stärke umfaßt.

5. Gerät gemäß irgendeinem der Ansprüche 1 bis 4, dadurch gekennzeichnet, daß der Deckel (6) des Kastens (3) über keine Wärmeisolierung verfügt und mit Aufheizmitteln ausgestattet ist.

6. Gerät gemäß irgendeinem der Ansprüche 1 bis 5, dadurch gekennzeichnet, daß die Aufheizmittel (8) durch einen flachen elektrischen Widerstand gebildet werden, der auf die Außenfläche der dazugehörigen Wand (6,7) geklebt ist.

7. Gerät gemäß irgendeinem der Ansprüche 1 bis 6, dadurch gekennzeichnet, daß die Pailletten (19) zwischen zwei waagerechten, wärmeleitenden, unmittelbar neben den Pailletten liegenden Platten (22,24), die im Inneren des Kastens (3) vorgesehen sind, angeordnet sind.

8. Gerät gemäß Anspruch 7, dadurch gekennzeichnet, daß zumindest eine der Platten (22,24) in Berührung mit den Pailletten steht.

9. Gerät gemäß irgendeinem der Ansprüche 7 oder 8, dadurch gekennzeichnet, daß die obere Platte (24) ein Fenster (26) senkrecht zur Längsrichtung der Pailletten (19) aufweist.

10. Gerät gemäß irgendeinem der Ansprüche 7 bis 9, dadurch gekennzeichnet daß die untere Platte (22) fest mit dem Kasten (3) verbunden ist, während die obere Platte (24) von dem Deckel (6) des Kastens mittels einer wärmeisolierenden elastisch nachgebenden Halterung (25) getragen wird.

EP 0 258 092 B1

FIG.1

FIG.2

7

FIG. 3

FIG. 4